Europäisches Patentamt

(19) European Patent Office  (11) Numéro de publication : **0 034 099**

Office européen des brevets  **B1**

(12)  FASCICULE DE BREVET EUROPÉEN

(45) Date de publication du fascicule du brevet :  (51) Int. Cl.³ : **B 62 D  1/18**
13.07.83

(21) Numéro de dépôt : **81400187.1**

(22) Date de dépôt : **06.02.81**

(54) Colonne de direction pour véhicule automobile.

(30) Priorité : **07.02.80 ES 489058**

(43) Date de publication de la demande :
**19.08.81 Bulletin 81/33**

(45) Mention de la délivrance du brevet :
**13.07.83 Bulletin 83/28**

㊻ Etats contraotants désignés :
**DE FR GB IT SE**

(56) Documents cités :
**FR A 1 410 866**
**FR A 1 523 214**

(73) Titulaire : **BENDIBERICA S.A.**
**Balmès 243**
**Barcelona 6 (ES)**

(72) Inventeur : **Soler Bruguera, Raimundo M.**
**Plaza Comercio 3, 2a, 1a Escalera B**
**Barcelona (ES)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

Colonne de direction pour véhicule automobile

L'invention concerne une colonne de direction pour véhicule automobile à inclinaison réglable permettant de positionner et d'orienter le volant selon le souhait du conducteur habituel du véhicule.

On a déjà proposé des systèmes permettant de modifier l'orientation du volant d'un véhicule automobile, pour un plus grand confort de conduite de l'utilisateur. Jusqu'à présent, on a surtout rencontré de tels systèmes sur certains véhicules de tourisme. Particulièrement, on connaît un système consistant en une articulation blocable disposée entre le volant et l'extrémité de l'arbre de commande de transmission, un levier disposé sur le côté du volant permettant de faire jouer l'articulation blocable et de l'immobiliser dans une position voulue. Un tel système est relativement compliqué et d'un prix de revient élevé.

Le brevet français 1 410 866 décrit par ailleurs une colonne de direction réglable comportant deux tronçons d'arbre de commande connectés bout à bout par un moyen de couplage articulé, et deux manchons abritant respectivement ces tronçons d'arbre et assemblés bout à bout grâce à des moyens coopérants. Toutefois, dans ce document, les deux manchons sont reliés l'un à l'autre de façon articulée par des tourillons, la position angulaire relative des manchons étant déterminée par une biellette articulée sur l'un des manchons et couplée à un moteur électrique de réglage de position disposé sur l'autre manchon. Un tel système est également relativement compliqué, délicat, et d'un prix de revient élevé.

L'invention a pour objet de proposer un système plus simple, robuste et plus fiable, bien adapté pour équiper un véhicule poids lourd qui représente le domaine d'application principalement visé.

Dans cet esprit, l'invention concerne donc une colonne de direction pour véhicule automobile, du type comportant deux tronçons d'arbre de commande connectés bout à bout par un moyen de couplage articulé et deux manchons abritant respectivement lesdits tronçons et assemblés bout à bout grâce à deux moyens coopérants, caractérisée en ce que les moyens coopérants des manchons forment brides d'assemblage, dont l'un au moins des plans est incliné par rapport à la normale de l'axe longitudinal du manchon auquel il appartient, et en ce que des moyens d'assemblage et de serrage desdits moyens coopérants formant brides sont opérants pour au moins deux positions angulaires relatives desdits manchons.

Un mode de réalisation préféré d'une colonne de direction conforme à l'invention permet un réglage relatif des deux parties de la colonne de direction en une infinité de positions angulaires possibles.

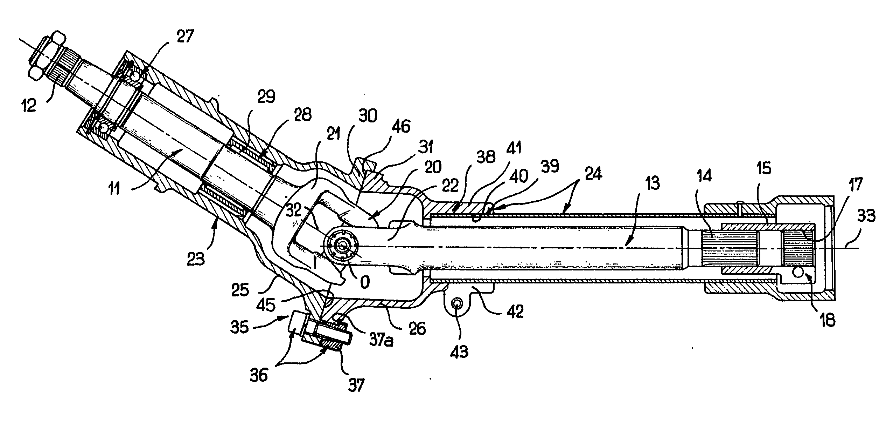

L'invention sera mieux comprise et d'autres avantages de celle-ci apparaîtront mieux à la lumière de la description qui va suivre d'un mode de réalisation préféré de l'invention et faite en référence au dessin annexé dans lequel la figure unique représente une vue en coupe d'une colonne de direction conforme aux principes de l'invention.

Cette colonne de direction comporte deux tronçons d'arbre de commande de transmission, un premier tronçon 11 dont une extrémité cannelée 12 est adaptée pour recevoir un volant (non représenté) et un second tronçon 13 comportant également une extrémité cannelée 14 sur laquelle est engagée une pièce d'adaptation 15, en forme de douille, permettant la connexion de l'extrémité 14 à l'entrée du boîtier de direction, laquelle peut notamment être constituée par l'axe d'entrée d'une valve de servo-direction. La douille 15 comporte à cet effet des cannelures internes 17 et est fendue axialement au voisinage de ces cannelures pour ménager une bride annulaire de serrage 18. Les tronçons 11 et 13 sont connectés bout à bout par un moyen de couplage articulé constitué ici par un joint homocinétique et de préférence universel d'articulation à la Cardan 20, chaque fourche 21, 22 du joint universel 20 constituant une extrémité axiale de l'un des tronçons 11, 13 respectivement. La colonne de direction comporte en outre deux manchons 23 et 24, formant un boîtier et abritant respectivement les tronçons 11 et 13. Pour cela, chaque manchon 23 ou 24 a une forme générale cylindrique mais sa portion extrême 25 ou 26 abritant la fourche 21 ou 22, respectivement, a une section élargie en conséquence pour ne pas risquer de bloquer le joint universel 20. Le tronçon 11 est monté en rotation autour de son axe longitudinal dans le manchon 23 grâce à un roulement à billes 27 d'une part, situé à l'extrémité du manchon 23 qui est opposée à la portion extrême élargie 25 et à un palier interne 28 d'autre part, muni notamment d'une garniture de contact 29 en caoutchouc.

Selon l'invention, les manchons 23 et 24 sont assemblés bout à bout (par leurs portions extrêmes élargies 25 et 26) et comportent pour cela deux moyens coopérants formant brides d'assemblage 30 et 31, respectivement, dont l'un au moins est incliné par rapport à la normale de l'axe longitudinal du manchon auquel il appartient. Dans l'exemple décrit, les deux brides 30 et 31 sont inclinées de cette façon, c'est-à-dire que la bride 30 est légèrement inclinée par rapport à un plan perpendiculaire à l'axe longitudinal 32 du manchon 23 tandis que la bride 31 est légèrement inclinée par rapport à un plan perpendiculaire à l'axe longitudinal 33 du manchon 24.

Selon le mode de réalisation représenté, les moyens formant brides 30 et 31 sont conformés avec des surfaces planes d'assemblage 45 et 46, respectivement, en contact mutuel après assemblage des manchons et définissant ainsi un plan d'assemblage de ceux-ci, dans lequel le centre O du joint universel 20 est sensiblement situé. D'autre part, des moyens d'assemblage et de serrage 35 de ces brides 30 et 31 sont opérants pour au moins deux positions angulaires relatives des manchons 23 et 24. Dans le présent mode de réalisation, ces moyens d'assemblage et de serrage sont constitués par trois boulons 36 montés à la périphérie de la bride 30 (trois boulons sont prévus espacés à 120° à la périphérie de cette bride mais un seul est visible sur le dessin) et l'écrou 37 de chaque boulon est agencé en forme d'ergot susceptible de venir en engagement, au serrage, avec un épaulement périphérique 37a de la bride 31. De préférence, le périmètre externe des deux surfaces d'assemblage 45 et 46 est circulaire de sorte qu'on peut ainsi obtenir une infinité de positions angulaires relatives entre les deux manchons 23 et 24, une position angulaire donnée étant stabilisée par le serrage des boulons 36. On notera à ce propos que le manchon 24 comporte principalement deux parties 38 et 39 emmanchées coaxialement l'une dans l'autre. La partie 38 se compose sensiblement de toute la portion extrême élargie 26 précitée et de la bride 31 et elle comporte un alésage interne 40 qui reçoit l'extrémité cylindrique de la partie 39. La paroi 41 de l'alésage 40 comporte une fente axiale 42 sur une certaine longueur, pour transformer cette paroi 41 en une sorte de bride annulaire de serrage ; la fente 42 étant refermée au moyen d'un boulon 43. De cette façon, la partie 38 est orientable coaxialement par rapport à la partie 39 (par desserrage momentané du boulon 43) laquelle est fixe par rapport à un châssis-support (non représenté) sur lequel sont montés les autres éléments du système de direction du véhicule.

Le réglage de l'inclinaison du volant se fait donc de la façon suivante. Les boulons 36 étant desserrés, il est possible de faire glisser en rotation les deux surfaces de contact 45 et 46 l'une par rapport à l'autre. Ce glissement s'accompagne bien évidemment d'une variation de l'angle entre les axes 32 et 33, c'est-à-dire en fait une variation de l'inclinaison du volant qui est monté à l'extrémité cannelée 12 du tronçon 11. Il suffit de resserrer les boulons 36 lorsque l'inclinaison du volant correspond au souhait du conducteur du véhicule. Etant donné que cette variation d'inclinaison du volant s'accompagne d'un déport latéral de celui-ci, il suffit de desserrer momentanément le boulon 43 et de faire tourner axialement la partie 38 par rapport à la partie fixe 39 pour compenser ce déport et ramener le volant en bonne position.

## Revendications

1. Colonne de direction pour véhicule automobile, comportant deux tronçons (11, 13) d'arbre de commande connectés bout à bout par un moyen de couplage articulé (20), et deux manchons (23, 24) abritant respectivement lesdits tronçons et assemblés bout à bout grâce à deux moyens coopérants, caractérisée en ce que les moyens coopérants des manchons (23, 24) forment brides d'assemblage (30, 31), dont l'un au moins des plans est incliné par rapport à la normale de l'axe longitudinal du manchon auquel il appartient, et en ce que des moyens d'assemblage et de serrage (35) desdits moyens coopérants formant brides sont opérants pour au moins deux positions angulaires relatives desdits manchons.

2. Colonne de direction selon la revendication 1, caractérisée en ce que lesdits moyens coopérants comportent des surfaces planes d'assemblage (45, 46) respectives, en contact mutuel après assemblage desdits manchons et définissant ainsi un plan d'assemblage de ceux-ci et en ce que le centre d'articulation (O) dudit moyen de couplage articulé est sensiblement situé dans ledit plan d'assemblage.

3. Colonne de direction selon la revendication 1 ou 2, caractérisée en ce que ledit moyen de couplage articulé (20) est un joint homocinétique **et de préférence un joint universel d'articulation au Cardan.**

4. Colonne de direction selon l'une des revendications 1 à 3, caractérisée en ce que lesdits moyens d'assemblage et de serrage comportent plusieurs boulons (36) montés à la périphérie de l'une desdites brides et en ce que l'écrou (37) de chaque boulon est agencé en forme d'ergot susceptible de venir en engagement au serrage avec un épaulement périphérique (37a) de l'autre bride.

5. Colonne de direction selon la revendication 4, caractérisée en ce que le périmètre desdites surfaces planes d'assemblage (45, 46) est circulaire pour permettre une infinité de positions angulaires relatives entre les deux manchons précités.

6. Colonne de direction selon la revendication 4 ou 5, caractérisée en ce que l'un desdits manchons est composé d'au moins deux parties (38, 39) assemblées sensiblement coaxialement par un moyen de serrage (43) et que l'une de ces parties comporte la bride dudit manchon et est orientable coaxialement par rapport à l'autre partie qui est fixée à un châssis-support.

## Claims

1. A steering column for an automotive vehicle, comprising a pair of steering shaft members (11, 13) connected endwise by a hinged coupling means (20), and a pair of sleeves (23, 24) within which are respectively housed said steering shaft members and which are assembled endwise by a pair of cooperating means, characterized in that said cooperating means of said sleeves (23, 24) form assembly flanges (30, 31), at least one of which is inclined with respect to the normal to the longitudinal axis of the associated sleeve, and in that assembly and clamping means (35) of said cooperating means forming flanges are operable for at least two relative angular positions of said sleeves.

2. The steering column of claim 1, characterized in that said cooperating means comprise plane assembly surfaces (45, 46), respectively, in mutual contact after assembly of said sleeves and thereby defining an assembly plane thereof, and in that the pivot center (O) of said pivotal coupling means is substantially situated in said assembly plane.

3. The steering column of claim 1 or 2, characterized in that said hinged coupling means (20) is a homokinetic joint and preferable a universal joint of the cardan type.

4. The steering column of any of claims 1 to 3, characterized in that said assembly and clamping means comprise a plurality of bolts (36) mounted at the periphery of one of said flanges, and in that the nut (37) of each bolt is provided with a nose portion adapted to cooperate in tighting engagement with a peripheral shoulder (37a) of the other flange during clamping.

5. The steering column of claim 4, characterized in that the periphery of said plane assembly surfaces (45, 46) is circular to permit an infinity of relative angular positions between said two sleeves.

6. The steering column of claim 4 or 5, characterized in that one of said sleeves is composed of at least two parts (38, 39) assembled substantially coaxially by a clamping means (43), and that one of said parts comprises the flange of said sleeve and is adapted to be aligned coaxially with respect to the other part which is fixed to a chassis support.

**Ansprüche**

1. Lenksäule für ein Kraftfahrzeug, mit zwei Lenkwellenteilen (11, 13), die Ende an Ende durch eine Gelenkkupplung (20) miteinander verbunden sind, und zwei Hülsen (23, 24), die die Lenkwellenteile jeweils schützen und mit Hilfe zweier zusammenwirkender Mittel Ende an Ende zusammengesetzt sind, dadurch gekennzeichnet, daß die zusammenwirkenden Mittel der Hülsen (23, 24) Montageflansche (30, 31) bilden, von denen zumindest einer bezüglich der Normalen der Längsachse der zugehörigen Hülse geneigt ist, und daß Spannmittel (35) der die Flansche bildenden zusammenwirkenden Mittel zumindest in zwei Winkelstellungen der Hülsen relativ zueinander betätigbar sind.

2. Lenksäule nach Anspruch 1, dadurch gekennzeichnet, daß die zusammenwirkenden Mittel jeweils eine ebene Anlagefläche (45, 46) aufweisen, die nach dem Zusammenbau der Hülsen aneinander anliegen und somit eine Montageebene derselben definieren, und daß der Gelenkmittelpunkt (O) der Gelenkkupplung im wesentlichen in der Montageebene angeordnet ist.

3. Lenksäule nach Anspruch 1 oder 2, dadurch gekennzeichnet, daß die Gelenkkupplung (20) ein homokinetisches Gelenk und vorzugsweise ein Kardan-Universalgelenk ist.

4. Lenksäule nach einem der Ansprüche 1 bis 3, dadurch gekennzeichnet, daß die Spannmittel mehrere Schrauben (36) aufweisen, die am Umfang eines der Montageflansche montiert sind, und daß die Mutter (37) jeder Schraube mit einer Nase versehen ist, die sich beim Verspannen an eine Umfangsschulter (37a) des anderen Flansches anlegt.

5. Lenksäule nach Anspruch 4, dadurch gekennzeichnet, daß der Umfang der ebenen Montageflächen (45, 46) kreisförmig ist, um eine unbegrenzte Anzahl von Winkelstellungen der beiden Hülsen relativ zueinander zu ermöglichen.

6. Lenksäule nach Anspruch 4 oder 5, dadurch gekennzeichnet, daß eine der Hülsen aus zwei Teilen (38, 39) zusammengesetzt ist, die durch ein Spannmittel (43) im wesentlichen koaxial zusammengefügt sind, und daß der eine der Teile den Flansch der Hülse aufweist und bezüglich des anderen am Fahrzeugrahmen befestigten anderen Teiles koaxial ausrichtbar ist.